# EUROPEAN PATENT SPECIFICATION

(11) **EP 2 883 739 B1**
(45) Date of publication and mention of the grant of the patent: **14.06.2023**
(21) Application number: 12882691.4
(22) Date of filing: 10.08.2012
(51) Int. Cl.: B60L 53/66

(54) **ELECTRIC VEHICLE**
ELEKTROFAHRZEUG
VÉHICULE ÉLECTRIQUE

(43) Date of publication of application: 17.06.2015
(73) Proprietor: Panasonic Intellectual Property Management Co., Ltd., Osaka-shi, Osaka 540-6207 (JP)
(72) Inventor: YANAGAWA, Makoto, Chuo-ku, Osaka-shi, Osaka 40-6207 (JP); KASITANI, Tokiko, Chuo-ku, Osaka-shi, Osaka 540-6207 (JP); MORIOKA, Takahiro, Chuo-ku, Osaka-shi, Osaka 540-6207 (JP)
(74) Representative: Grünecker Patent- und Rechtsanwälte PartG mbB
(86) International application number: PCT/JP2012/005091
(87) International publication number: WO 2014/024227

(56) References cited:
- EP-A2- 1 783 003
- EP-A2- 2 306 612
- WO-A1-2010/120551
- WO-A1-2011/077780
- JP-A- H10 173 802
- JP-A- 2002 062 347
- JP-A- 2002 205 683
- JP-A- 2002 205 683
- JP-A- 2006 185 246
- JP-A- 2012 050 156
- KR-A- 20110 101 846
- US-A1- 2003 167 345
- US-A1- 2008 304 499
- US-A1- 2011 227 531
- YEQIN WANG ET AL: "Electronic control system design and test of pure electric vehicle battery management system", MECHANIC AUTOMATION AND CONTROL ENGINEERING (MACE), 2011 SECOND INTERNATIONAL CONFERENCE ON, IEEE, 15 July 2011 (2011-07-15), pages 1289-1292, XP032031705, DOI: 10.1109/MACE.2011.5987178 ISBN: 978-1-4244-9436-1

## Description

### Technical Field

The present invention relates to a power assisted bicycle.

### Background Art

In recent years, it is proposed that connectors for electric components mounted on power assisted bicycles and electric bicycles and communications protocols are standardized and the electric components are flexibly connected to each other regardless of the manufacturer of the electric components.

For example, in electric vehicles such as a power assisted bicycle and an electric bicycle, it is proposed that connectors for connecting electric components to each other and communications protocols for communicating the control signals of the electric components are standardized to satisfy predetermined standards, the electric component including a charging device, a battery unit having a rechargeable battery, and a motor unit having a motor. This configuration enables charging even if charging stations at multiple locations and charging devices provided at various charging facilities are fabricated by different manufactures from electric vehicles such as a power assisted bicycle. Hence, enhanced convenience can be obtained for electric vehicle users. Moreover, this configuration may encourage a large number of companies to enter the industry of electric vehicles. In recent years, in communications methods for electric components, CAN (Controller Area Network) communication lines may be available, which have been already used in automobiles or between electric vehicles and charging stations for electric vehicles.

Patent Literature 1 discloses an electric vehicle system (facility) configured such that a charging station including a charging device and a power assisted bicycle are mechanically and electrically connected to each other and communicate with each other through CAN communication lines so as to charge the power assisted bicycle.

### Citation List

### Patent Literature

Patent Literature 1: German Patent Publication No. 102011003724

JP 2002 205683 A describes a power-assisted bicycle including a battery unit. The battery unit comprises a battery and a battery control part, which exchanges control signals with the charging device and a display device via separate communication lines. From the display device the control signals are further forwarded to the motor unit. The battery control part controls the charging/de-charging operation in communication with the charging unit or motor unit.

US 2008/304499 A1 relates to a gateway device which is used in a motor vehicle for exchange between different data protocols used for internal communication, the CAN protocol being among them. Each component uses its specific protocol standard and, if standard conversion is needed, the data of one component are processed by the gateway before transmission to another.

EP 2 306 612 A2 relates to an electric vehicle, e.g. an electric bicycle, including a battery apparatus. The battery apparatus can be connected to a charger and to a vehicle body controller which controls the motor through different communication lines. All communication lines by which the battery device is connected to other components are CAN communication lines.

Further patent documents provide examples of the use of the CAN standard in vehicle communications networks:
US 2011/227531 A1 describes a system and method for recharging an electric vehicle such as a car or a truck.

EP 1 783 003 A2 relates to a system for communications between a control system of a vehicle and electronic peripheral devices such as sensors, windshield wipers, or navigation devices. WO 2010/120551 A1 relates to a power flow management system for electric vehicles.

WO 2011/077780 A1 refers to a power grid control system using electric vehicles. US 2003/167345 A1 relates to an adaptor for communications between the communications network of a motor vehicle and a remote device, such as a PC or a personal digital assistant (PDA).

KR 2011 0101846 A relates to a system for power-line communications between a vehicle and a remote vehicle charge and communications system. Document "Electronic Control System Design and Test of Pure Electric Vehicle Battery Management System", Wang et al, IEEE, 2011 Second International Conference on Mechanic Automation and Control Engineering, relates to a battery management system for an electric vehicle.

In particular, a battery pack is divided into several modules.

A battery test module measures battery voltage, current and temperature and transmits the collected data to a microcontroller via RS485 bus. A master control CPU is responsible for the analysis of cell data, SOC estimates, and implementation of charge and discharge control strategy. The battery management system's central controller comprises a battery pack management control unit (BMU) controller and a battery module management control unit (LECU) controller. The BMU communicates with the charger through CAN bus. Moreover, a C8051F040 chip is the BMU controller's master chip. The C8051F040 includes a UART serial interface and a CAN controller for communicating with each module's LECU through an internal CAN bus and with the charger through an external CAN bus.

### Summary of Invention

### Technical Problem

However, if connectors and communication protocols are standardized for all electric components such as a charging device, a battery unit, and a motor unit so as to satisfy predetermined standards, the electric components requires newly development, thereby considerably increasing the cost of development.

Even if all the electric components including a motor unit are configured to satisfy the predetermined standards, connection to electric components (e.g., a battery unit) having poor performance and safety may prevent sufficient use of original performance and safety.

In the development of electric components that satisfy the predetermined standards, for example, a motor unit to add a new function, if electric components other than those of the manufacturer of the motor unit are connected, it cannot be completely confirmed that the newly added function is satisfactorily performed or not. This leads to difficulty in adding new functions.

The present invention has been devised to solve the problems. An object of the present invention is to provide a power assisted bicycle that can prevent a significant increase in the cost of development or a severe deterioration of performance and safety while satisfactorily using a charging device that conforms to a predetermined standard in CAN communications.

### Solution to Problem

This is achieved by the features of the independent claim.

With this configuration, the charging device for CAN communications can be satisfactorily connected to the adaptor device. Moreover, the control signal required for charging is inputted or outputted from the adaptor device to the charging device and the battery unit, allowing the charging device to satisfactorily charge the battery unit through the charging line. This can reliably charge the battery unit connected to the charging device for CAN communications while using the non-CAN battery unit and the motor unit of the related art.

According to the present invention, the battery unit is connectable to a non-CAN charging device that is connectable via a communication line in accordance with the same standard through the same non-CAN communications as the battery unit. With this configuration, the battery unit can be charged while being connected to the conventional non-CAN charging device in accordance with the same standard, thereby improving the convenience of an electric vehicle user.

Furthermore, according to the present invention, the adaptor device is started by control power supply being power-supplied from the charging device when being connected to the charging device having the CAN communication line. With this configuration, the adaptor device unconnected to the charging device having the CAN communication line is not started, thereby preventing a reduction in the power storage of the battery without consuming the power of the battery.

### Advantageous Effects of Invention

The present invention includes an adaptor device that is connected to a battery unit and a motor unit via a non-CAN communication line and a power supply line, respectively. The adaptor device includes a CAN communication circuit that processes a control signal via a CAN communication line from a charging device for charging a battery, and a charging line that supplies electric power from the charging line of the charging device to the battery unit, the adaptor device being connected to a connector for CAN communications. This can satisfactorily charge the battery unit connected to the charging device for CAN communications while using the non-CAN battery unit and the motor unit of the related art. With this configuration, the battery unit and the motor unit may be identical in configuration to conventional units, minimizing an increase in the cost of development. Furthermore, the battery unit and the motor unit may be conventional reliable units. This configuration can prevent connection of a battery unit with low performance and safety, thereby satisfactorily keeping original performance and safety. For example, in the development of the motor unit, a newly added function can be fully performed.

Moreover, the battery unit can be connected to a non-CAN charging device that is connectable via a communication line in accordance with the same standard of non-CAN communications as the battery unit. Thus, the battery unit can be charged while being connected to the conventional non-CAN charging device, improving the convenience of an electric vehicle user with high reliability.

Furthermore, the adaptor device is started by control power supply being power-supplied from the charging device when being connected to the charging device having the CAN communication line. This configuration can prevent a reduction in the power storage of the battery when the adaptor device is not connected to the charging device having the CAN communication line, thereby preventing a reduction in the power storage of the battery from leading to a shorter traveling distance.

### Brief Description of Drawings

[FIG. 1] FIG. 1 is an overall side view showing a power assisted bicycle as an example of an electric vehicle according to an embodiment of the present invention.
[FIG. 2] FIG. 2 is a side view showing the principal part of the power assisted bicycle according to the embodiment of the present invention.
[FIG. 3] FIG. 3 is a block diagram schematically showing that a charging device for CAN communications is connected to the power assisted bicycle according to the embodiment of the present invention.
[FIG. 4] FIG. 4 is a side view schematically showing that the charging device for CAN communications is connected to the power assisted bicycle according to the embodiment of the present invention.
[FIG. 5] FIG. 5 is a perspective view schematically showing that the battery unit of the power assisted bicycle is connected to a charging device for UART communications according to the embodiment of the present invention.
[FIG. 6] FIG. 6 is a block diagram schematically showing that the power assisted bicycle is connected to the charging device for UART communications according to the embodiment of the present invention.

### Description of Embodiments

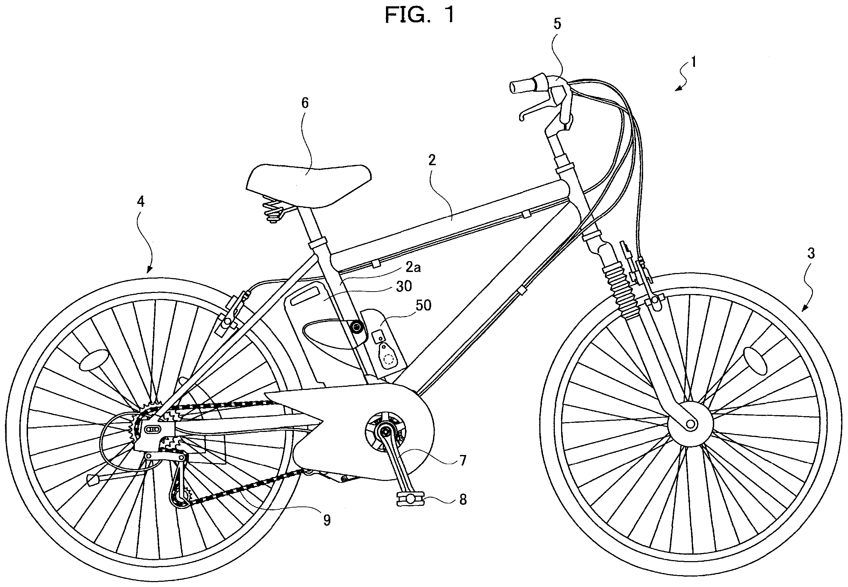

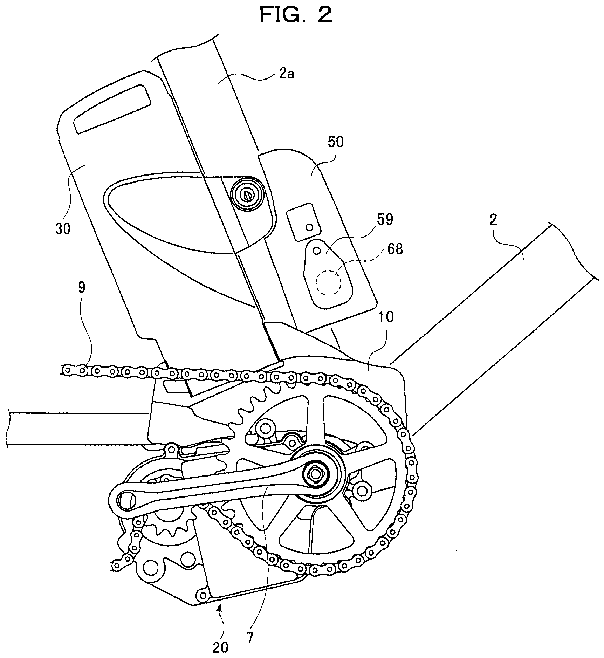

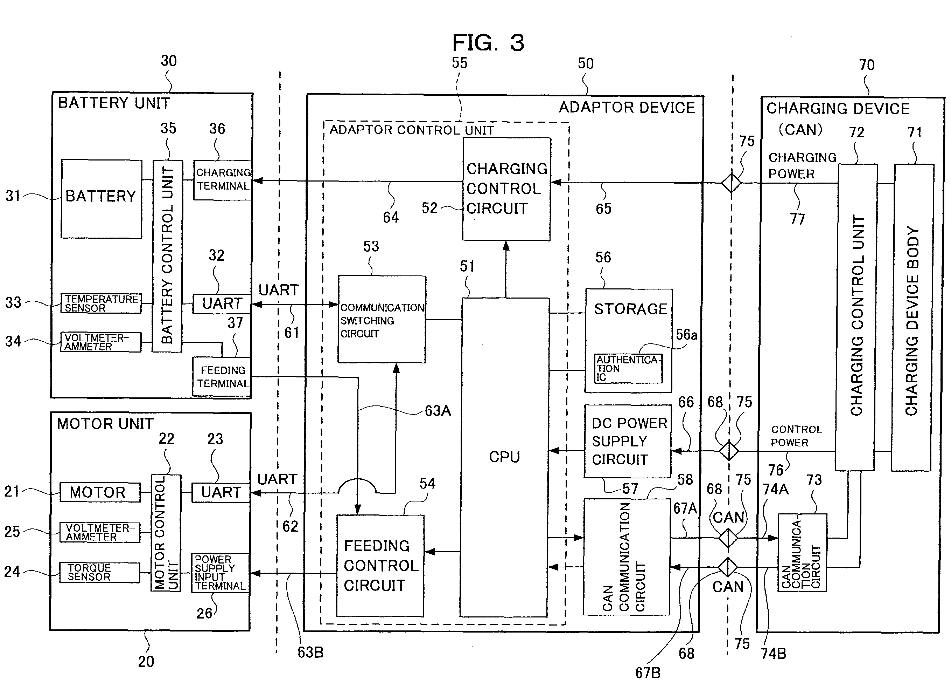

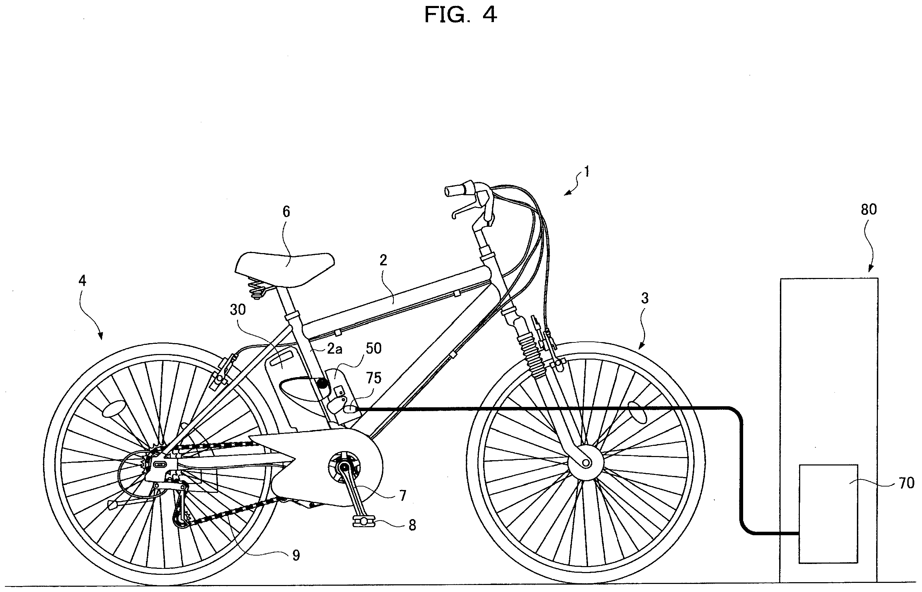

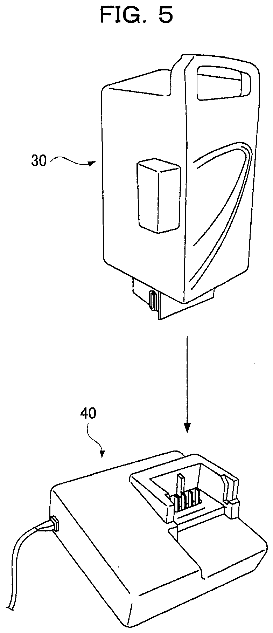

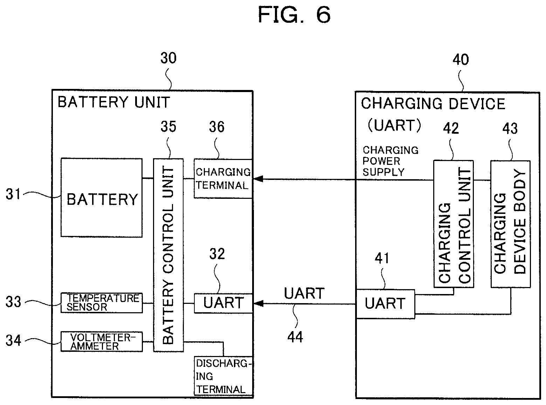

An electric vehicle according to an embodiment of the present invention will be described below with reference to the accompanying drawings. In the present embodiment, the electric vehicle is a power assisted bicycle that can be driven by an auxiliary driving force generated by a motor in addition to a human driving force generated by a pedal force from a pedal. FIG. 1 is an overall side view showing the power assisted bicycle as an example of the electric vehicle according to the embodiment of the present invention. FIG. 2 is a side view showing the principal part of the power assisted bicycle. FIGS. 3 and 4 are a block diagram and a side view that schematically show that a charging device for CAN communications is connected to the power assisted bicycle. FIGS. 5 and 6 are a perspective view and a block diagram that schematically show that a charging device for UART communications is connected to the power assisted bicycle.

In FIGS. 1 and 3, reference numeral 1 denotes the power assisted bicycle that is an example of the electric vehicle. As shown in FIGS. 1 to 4, the power assisted bicycle 1 includes a body frame 2, front and rear wheels 3 and 4, a handlebar 5 that changes the direction of the front wheel 3, a saddle 6, a crank 7, pedals 8, a chain 9 that transmits a pedal force (human driving force) from the pedals 8 to the rear wheel 4, a motor unit 20 that includes a motor 21 (see FIG. 3) acting as a driving force source for generating an auxiliary driving force (assist force) and a control unit 22 for electrically controlling various units including the motor 21, a battery unit 30 that includes a battery (secondary battery) 31 for supplying driving power to the motor 21, and a battery mounting part 10 (see FIG. 2) for detachably mounting the battery unit 30.

As shown in FIG. 3, the motor unit 20 and the battery unit 30 are configured such that control signals based on predetermined protocols are inputted and outputted through communication lines 61 and 62 in accordance with the UART (Universal Asynchronous Receiver Transmitter) standard that is different from the standard of CAN (Controller Area Network) communications. The motor unit 20 and the battery unit 30 have communications through UART terminals 23 and 32. In other words, the motor unit 20 and the battery unit 30 are similar to those of a conventional power assisted bicycle.

As shown in FIG. 3, the motor unit 20 includes a torque sensor 24 that detects a pedal force (human driving force) from the pedals 8, a voltmeter-ammeter 25 that measures a voltage or a current of the motor 21, a power supply input terminal 26 that receives power inputted to the motor unit 20, and the motor control unit 22 that can receive signals from the torque sensor 24 and the voltmeter-ammeter 25 and control the motor 21.

The battery unit 30 includes a temperature sensor 33 that detects the temperature of the battery 31 and a voltmeter-ammeter 34 that measures a voltage or current charged to or discharged from the battery 31. The battery unit 30 further includes a battery control unit 35 that can receive signals from the temperature sensor 33 and the voltmeter-ammeter 34 and control charging, discharging, and so on of the battery 31. In FIG. 3, reference numeral 36 denotes a charging terminal for the battery unit 30 and reference numeral 37 denotes a feeding terminal for the battery unit 30.

As shown in FIGS. 5 and 6, the battery unit 30 is removed from the battery mounting part 10 and is attached to a charging device 40 connected to a power supply at home and the like, enabling charging for the battery unit 30. In this configuration, the charging device 40 has a UART terminal 41 and a charging control unit 42 that input and output control signals based on a predetermined protocol through a communication line 44 of the UART standard. This configuration enables charging during communications with the battery unit 30 through the communication line (UART communication line) 44 conforming to the standard of the predetermined protocol for conventional UART communications. In other words, the charging device 40 is identical in configuration to a charging device for charging the battery unit of a conventional power assisted bicycle. Reference numeral 43 denotes a charging device body. The charging device 40 is provided for UART communications rather than CAN communications, which will be described later, and thus the charging device 40 may be called a non-CAN communication charging device 40.

For example, as shown in FIGS. 3 and 4, the power assisted bicycle 1 has an adaptor device 50 in addition to the foregoing configuration. The adaptor device 50 is connected to a charging device 70 (hereinafter, will be also called the CAN charging device 70) that is provided in, for example, a charging station 80 and conforms to the standard of a predetermined protocol for CAN communications, enabling charging to the power assisted bicycle 1.

As shown in FIG. 3, the charging device 70 includes a charging device body 71, a charging control unit 72, and a CAN communication circuit 73 that inputs and outputs a control signal based on a predetermined protocol for the standard of CAN (Controller Area Network) communications. The control signal is inputted to or outputted from the adaptor device 50 through CAN communication lines 74A and 74B connected to the CAN communication circuit 73. Charging power from the charging device body 71 is outputted to a charging control circuit 52 of the adaptor device 50, which will be described later, while being controlled by the charging control unit 72; meanwhile, control power from the charging device body 71 is outputted to a DC power supply circuit 57 of the adaptor device 50, which will be described later, while being controlled by the charging control unit 72. The CAN communication lines 74A and 74B, an output line 76 for control power, and a charging line 77 serving as an output line for charging power are all collectively connected to standardized CAN connectors 75 on the ends of the lines and circuits. In FIG. 3, for the purpose of illustration, the CAN connectors 75 are connected to the CAN communication lines 74A and 74B, the output line 76 for control power, and the charging line 77. In an actual configuration, however, these lines are collectively connected to the single CAN connector 75.

As shown in FIG. 3, the adaptor device 50 is provided with a control unit (adaptor control unit) 55 including a central processing unit (will be called a CPU) 51 having a microcomputer, the charging control circuit 52, a communication switching circuit 53, and a feeding control circuit 54, a storage 56 that stores a variety of information, the DC (direct current) power supply circuit 57, and a CAN communication circuit 58. In the present embodiment, the adaptor device 50 is connected to the UART communication lines 61 and 62 serving as non-CAN communication lines for communicating control signals based on the predetermined protocol of the UART standard and power supply lines 63A and 63B for supplying electric power from the battery 31 to the motor 21. Moreover, the adaptor device 50 processes control signals through CAN communication lines 67A and 67B from the charging device 70 that charges the battery 31. The adaptor device 50 further includes charging lines 64 and 65 that supply electric power to the battery unit 30 from the charging line 77 of the charging device 70.

The charging line 65 connected to the charging line 77 of the charging device 70, a control-power input line 66 connected to the control-power output line 76 of the charging device 70, and the CAN communication lines 67A and 67B connected to the CAN communication lines 74A and 74B of the charging device 70 are all collectively connected to standardized CAN connectors 68 on the ends of the lines. When the power assisted bicycle 1 to be charged is connected to the CAN (including the CAN communication lines 74A and 74B) charging device 70, the CAN connector 68 of the adaptor device 50 is connected to the CAN connector 75 of the charging device 70. The storage of the adaptor device 50 has an authentication IC 56a that causes the battery unit 30 to recognize the adaptor device 50. As shown in FIG. 2, the location of the CAN connector 68 on the adaptor device 50 has an elastic connector cover 59 made of materials such as rubber. When the charging device 70 is connected, the CAN connector 75 of the charging device 70 is connected to the CAN connector 68 of the adaptor device 50 with the flipped connector cover 59.

In this configuration, if the power assisted bicycle 1 is not connected to the CAN charging device 70, control power is not supplied and thus the adaptor device 50 is not started (operated). At this point, in the communication switching circuit 53, the UART communication line 61 to the battery unit 30 and the UART communication line 62 to the motor unit 20 are connected to each other. Moreover, in the feeding control circuit 54 at this point, the power supply line 63A to the battery unit 30 and the power supply line 63B to the motor unit 20 are connected to each other.

With this configuration, when the charging device 70 is not connected, the motor unit 20 and the battery unit 30 are fully connected to satisfactorily supply power from the battery 31 of the battery unit 30 to the motor unit 20; meanwhile, the motor 21 is driven in response to the need for an auxiliary driving force.

In a state in which the CAN charging device 70 is not connected to the adaptor device 50, the adaptor device 50 is not started and thus the electric power of the battery 31 is not consumed. This can prevent a reduction in the accumulated power of the battery 31.

In this configuration, when the power assisted bicycle 1 is connected to and charged on the charging device 70 for CAN communications provided in the charging station 80 and so on, the CAN connector 75 of the charging device 70 is connected to the CAN connector 68 of the adaptor device 50. This configuration supplies control power from the charging device 70 to the adaptor device 50 so as to start the adaptor device 50. Subsequently, the request signal of a control signal is inputted or outputted from the charging device 70 to the adaptor device 50 through the CAN communication lines 67A and 67B. In response to the signal, a control signal for charging is inputted or outputted from the adaptor device 50 to the charging device 70. Moreover, the request signal of a control signal is inputted or outputted from the battery unit 30 to the adaptor device 50 through the non-CAN communication lines 61 and 62. Accordingly, a control signal for charging is inputted or outputted from the adaptor device 50 to the battery unit 30.

In this way, information about the start and end of charging, a charging current or voltage, and the capacity and temperature of the battery 31 is outputted from the adaptor device 50 to the charging device 70 and is outputted from the adaptor device 50 to the battery unit 30. Thus, the control signal for charging is reliably transmitted between the charging device 70 and the battery unit 30, reliably achieving an automatic charging operation. Hence, the charging device 70 for CAN communications can satisfactorily charge the battery 31 of the battery unit 30. This can satisfactorily charge the battery 31 of the battery unit 30 connected to the charging device 70 for CAN communications while using the non-CAN battery unit 30 and the motor unit 20 that are identical in configuration to the related art. As a matter of course, the charging device 70 is not limited to that of the charging station 80. Reliable charging can be obtained as long as the charging device conforms to the standard of CAN communications and the standard of the predetermined protocol. Furthermore, the charging device may be produced by the same manufacturer as the battery unit 30 or the motor unit 20 or a different manufacturer from the battery unit 30 and the motor unit 20. Thus, the power assisted bicycle 1 can be connected and satisfactorily charged in many locations.

With this configuration, the battery unit 30 and the motor unit 20 may be identical in configuration to a battery unit and a motor unit that conform to the predetermined protocol standard of UART communications as examples of conventional non-CAN units. This can eliminate the need for developing or manufacturing another battery unit or another motor unit in accordance with the standard of CAN communications and the standard of a predetermined protocol, thereby minimizing an increase in the cost of development. Furthermore, the battery unit 30 and the motor unit 20 may be conventional reliable units. This configuration can prevent connection of a battery unit with low performance and safety, thereby satisfactorily keeping original performance and safety. For example, in the development of the motor unit 20, a newly added function can be fully performed.

With this configuration, the battery unit 30 can be connected to the non-CAN charging device 40 that is connectable via the UART communication line 61 in accordance with the same protocol standard as an example of the same non-CAN communications as the battery unit 30. Thus, the battery unit 30 can be charged while being connected to the conventional non-CAN charging device 40, improving the convenience of the power assisted bicycle 1. In the present embodiment, the battery unit 30 detached from the battery mounting part 10 of the power assisted bicycle 1 can be connected to the non-CAN charging device 40 conforming to the same protocol standard. The present invention is not limited to this configuration. The battery unit 30 may have a connector that can be connected to the non-CAN charging device 40, enabling charging of the battery unit 30 attached to the battery mounting part 10.

In the present embodiment, the battery unit 30, the motor unit 20, and the adaptor device 50 communicate with one another in accordance with the UART standard in a connectable manner through the communication line that conforms to the same standard of non-CAN communications. The present invention is not limited to this configuration. These units may communicate with one another in accordance with a non-CAN communication standard other than the UART standard.

Moreover, in the present embodiment, the adaptor device 50 is attached to a seat post 2a of the body frame 2. The present invention is not limited to this configuration. The adaptor device 50 may be provided at another point of the body frame 2.

In the present embodiment, an electric vehicle is the power assisted bicycle 1 that can be driven by the auxiliary driving force of the motor 21 in addition to a human driving force generated by a pedal force from the pedals 8. The present invention is not limited to this configuration and thus is applicable to an electric bicycle or an electric tricycle that can be driven only by the driving force of a motor, an electric bicycle that is switchable between a traveling state with a pedal force from a pedal and a traveling state with only the driving force of a motor, or an electric vehicle that is driven by the driving force of a motor.

### Industrial Applicability

The present invention is applicable to a variety of electric vehicles that include battery units and motor units and can be charged by charging devices.

## Claims

1. A power assisted bicycle that is drivable by an auxiliary driving force generated by a motor (21) in addition to a human driving force generated by a pedal force from a pedal (8), comprising:
a battery unit (30) having a rechargeable battery (31), a battery control unit (35) for controlling the charging and discharging of the battery (31), and a non-CAN, Controller Area Network, terminal (32);
the power assisted bicycle further comprising a motor unit (20) having the motor (21) driven by the battery (31) of the battery unit (30) and a motor control unit (22),
wherein the power assisted bicycle is further comprising an adaptor device (50) that is connected to a non-CAN communication line (61, 62) for communicating a control signal to the battery control unit (35) of the battery unit (30) via the non-CAN terminal (32) and the motor control unit (22) of the motor unit (20) in accordance with a non-CAN standard and a power supply line (63A, 63B) for supplying electric power from the battery (31) to the motor (21),
the adaptor device (50) including a CAN communication circuit (58) configured to process a control signal via a CAN communication line (67A, 67B) from a charging device (70) for charging the battery (31), and a charging line (64, 65) configured to supply electric power from the charging device (70) to the battery unit (30), the adaptor device (50) being connectable to a CAN connector (68) for CAN communications,
the adaptor device (50) inputting or outputting a control signal required for charging, from or to the adaptor device (50) to or from the charging device (70) and the battery control unit (35) of the battery unit (30) when being connected via the CAN communication line (67A, 67B) to the charging device (70) having the CAN communication line (74A, 74B),
the adaptor device (50) inputting or outputting the control signal to or from the charging device (70) via the CAN communication line (67A, 67B) and inputting or outputting the control signal to or from the battery control unit (35) of the battery unit (30) via the non-CAN communication line (61) and the non-CAN terminal (32), and
the battery unit (30) being further connectable to and chargeable by a non-CAN charging device (40) that is connectable via a communication line (44) in accordance with the same standard through the same non-CAN communications as the battery unit (30).

2. The power assisted bicycle according to claim 1, wherein the adaptor device (50) is started by control power supply being power-supplied from the charging device (70) when being connected to the charging device (70) having the CAN communication line (74A, 74B).

3. The power assisted bicycle according to claims 1 or 2, wherein the non-CAN communication line (61, 62) is a UART, Universal Asynchronous Receiver Transmitter, communication line.

## Patentansprüche

1. Fahrrad mit elektrischer Unterstützung, das zusätzlich zu einer menschlichen Antriebskraft, die durch eine Pedalkraft von einem Pedal (8) erzeugt wird, mit einer Zusatz-Antriebskraft angetrieben werden kann, die von einem Motor (21) erzeugt wird, wobei es umfasst:
eine Batterie-Einheit (30) mit einer wiederaufladbaren Batterie (31), einer Batteriesteuerungs-Einheit (35) zum Steuern des Ladens und Entladens der Batterie (31), sowie einen Nicht-CAN-Anschluss (32);
wobei das Fahrrad mit elektrischer Unterstützung des Weiteren eine Motor-Einheit (20), deren Motor (21)von der Batterie (31) der Batterie-Einheit (30) angetrieben wird, sowie eine Motorsteuerungs-Einheit (22) umfasst,
und,
das Fahrrad mit elektrischer Unterstützung des Weiteren eine Adaptervorrichtung (50), die mit einer Nicht-CAN-Übertragungsleitung (61, 62) zum Übertragen eines Steuerungssignals zu der Batteriesteuerungs-Einheit (35) der Batterie-Einheit (30) über den Nicht-CAN-Anschluss (32) und die Motorsteuerungs-Einheit (22) der Motor-Einheit (20) gemäß einem Nicht-CAN-Standard verbunden ist, sowie eine Strom-Zuführleitung (63A, 63B) zum Zuführen von Strom von der Batterie (31) zu dem Motor (21) umfasst,
die Adaptervorrichtung (50) eine CAN-Übertragungsschaltung (58) enthält, die zum Verarbeiten eines Steuerungssignals über eine CAN-Übertragungsleitung (67A, 67B) von einer Ladevorrichtung (70) zum Laden der Batterie (31) ausgeführt ist, sowie eine Ladeleitung (64, 65) enthält, die zum Zuführen von Strom von der Ladevorrichtung (70) zu der Batterie-Einheit (30) ausgeführt ist, und die Adaptervorrichtung (50) mit einem CAN-Verbinder (68) für CAN-Übertragungen verbunden werden kann,
wobei die Adaptervorrichtung (50) ein zum Laden erforderliches Steuerungssignal aus der oder in die Adaptervorrichtung (50) in die oder aus der Ladevorrichtung (70) sowie der Batteriesteuerungs-Einheit (35) der Batterie-Einheit (30) eingibt oder ausgibt, wenn sie über die CAN-Übertragungsleitung (67A, 67B) mit der Ladevorrichtung (70) verbunden ist, die die CAN-Übertragungsleitung (74A, 74B) aufweist, die Adaptervorrichtung (50) das Steuerungssignal über die CAN-Übertragungsleitung (67A, 67B) in die oder aus der Ladevorrichtung (70) eingibt oder ausgibt und das Steuerungssignal über die Nicht-CAN-Übertragungsleitung (61) sowie den Nicht-CAN-Anschluss (32) in die oder aus der Batteriesteuer-Einheit (35) der Batterie-Einheit (30) eingibt oder ausgibt, und
die Batterie-Einheit (30) des Weiteren mit einer Nicht-CAN-Ladevorrichtung (40) verbunden und von dieser geladen werden kann, die über eine Übertragungsleitung (44) gemäß dem gleichen Standard über die gleiche Nicht-CAN-Übertragung wie die Batterie-Einheit (30) verbunden werden kann.

2. Fahrrad mit elektrischer Unterstützung nach Anspruch 1, wobei die Adaptervorrichtung (50) über Steuerungs-Stromversorgung gestartet wird, für die Strom von der Ladevorrichtung (70) zugeführt wird, wenn sie mit der Ladevorrichtung (70) verbunden ist, die die CAN-Übertragungsleitung (74A, 74B) aufweist.

3. Fahrrad mit elektrischer Unterstützung nach Anspruch 1 oder 2, wobei die Nicht-CAN-Übertragungsleitung (61, 62) eine UART-Übertragungsleitung ist.

## Revendications

1. Vélo à assistance électrique entraînable par une force d'entraînement auxiliaire générée par un moteur (21) en plus de la force d'entraînement humaine générée par une force de pédale exercée sur une pédale (8), comprenant :
une unité de batterie (30) comportant une batterie rechargeable (31), une unité de contrôle de batterie (35) pour contrôler la charge et la décharge de la batterie (31), et un terminal de bus de données non CAN, Controller Area Network, (32) ;
le vélo à assistance électrique comprenant en outre une unité de moteur (20) comportant le moteur (21) entraîné par la batterie (31) de l'unité de batterie (30) et une unité de contrôle de moteur (22),
dans lequel le vélo à assistance électrique comprend en outre un dispositif adaptateur (50) qui est connecté à une ligne de communication non CAN (61, 62) pour communiquer un signal de contrôle à l'unité de contrôle de batterie (35) de l'unité de batterie (30) via le terminal non CAN (32) et l'unité de contrôle de moteur (22) de l'unité de moteur (20) conformément à une norme non CAN, et à une ligne d'alimentation (63A, 63B) pour alimenter de l'électricité de la batterie (31) au moteur (21),
le dispositif adaptateur (50) comportant un circuit de communication CAN (58) configuré pour traiter un signal de contrôle via une ligne de communication CAN (67A, 67B) provenant d'un dispositif de charge (70) pour charger la batterie (31), et une ligne de charge (64, 65) configurée pour alimenter de l'électricité du dispositif de charge (70) à l'unité de batterie (30), le dispositif adaptateur (50) étant connectable à un connecteur CAN (68) pour réaliser des communications CAN,
le dispositif adaptateur (50) entrant ou sortant un signal de contrôle requis pour charger, depuis ou vers le dispositif adaptateur (50) vers ou depuis le dispositif de charge (70) et l'unité de contrôle de batterie (35) de l'unité de batterie (30) lorsqu'il est connecté via la ligne de communication CAN (67A, 67B) au dispositif de charge (70) comportant la ligne de communication CAN (74A, 74B), le dispositif adaptateur (50) entrant ou sortant le signal de contrôle vers ou depuis le dispositif de charge (70) via la ligne de communication CAN (67A, 67B) et entrant ou sortant le signal de contrôle vers ou depuis l'unité de contrôle de batterie (35) de l'unité de batterie (30) via la ligne de communication non CAN (61) et le terminal non CAN (32), et
l'unité de batterie (30) étant en outre connectable à et chargeable par un dispositif de charge non CAN (40) qui est connectable via une ligne de communication (44) conformément à la même norme et via les mêmes communications non CAN que l'unité de batterie (30).

2. Vélo à assistance électrique selon la revendication 1, dans lequel le dispositif adaptateur (50) est démarré en alimentant une alimentation de contrôle provenant du dispositif de charge (70) lorsqu'il est connecté au dispositif de charge (70) comportant la ligne de communication CAN (74A, 74B).

3. Vélo à assistance électrique selon la revendication 1 ou 2, dans lequel la ligne de communication non CAN (61, 62) est une ligne de communication à émetteur-récepteur asynchrone universel UART, Universal Asynchronous Receiver Transmitter.
